# EUROPÄISCHE PATENTSCHRIFT

(11) **EP 1 500 753 B1**
(45) Veröffentlichungstag und Bekanntmachung des Hinweises auf die Patenterteilung: **22.12.2010**
(21) Anmeldenummer: 04025360.1
(22) Anmeldetag: 06.07.2001
(51) Int. Cl.: E04B 2/74, E04C 2/04

(54) **In Trockenbauweise erstellte Trennwand und Verwendung einer Gipskartonplatte**
Dry wall partition wall and use of plasterboard
Cloison en construction à sec et utilisation d'un panneau en placoplatre

(30) Priorität: 08.07.2000 DE 10033373
(43) Veröffentlichungstag der Anmeldung: 26.01.2005
(62) Teilanmeldung aus: 01965070.4
(73) Patentinhaber: Richter-System GmbH & Co. KG, 64347 Griesheim (DE)
(72) Erfinder: Knauf, Alfons Jean, 64343 Griesheim (DE)
(74) Vertreter: Reiser, Tonio Andreas

(56) Entgegenhaltungen:
- EP-A1- 0 246 464
- GB-A- 1 053 333
- US-A- 5 761 864

## Beschreibung

Die Erfindung betrifft eine in Trockenbauweise erstellte Trennwand sowie die Verwendung einer Gipskartonplatte in einer solchen.

Gipskartonplatten werden in großem Umfang für unterschiedliche Zwecke im Bauwesen eingesetzt. Insbesondere dienen Gipskartonplatten auch zur Errichtung von Trennwänden in Trockenbauweise, wobei die Gipskartonplatten einlagig oder doppellagig beiderseits an einem Traggerüst angebracht werden, das beispielsweise aus metallischen C-Profilschienen besteht.

Die Schallübertragungseigenschaften einer so aufgebauten Trennwand werden im wesentlichen durch die Schallübertragung von der einen Wandschale über das Traggerüst in die andere Wandschale bestimmt. Die üblichen Maßnahmen zur Verringerung der Schallübertragung konzentrieren sich darauf, die Schallübertragung in den Ständerprofilen und Riegelprofilen des Traggerüsts zu verringern, beispielsweise dadurch, dass die Ständer und Riegel jeweils aus zwei Profilschienen bestehen, die über schalldämmendes Material miteinander verbunden sind. Der hierfür erforderliche Aufwand ist verhältnismäßig hoch.

Die GB-A-1 053 333 beschreibt eine Gipskartonplatte, welche auf der einen Seite stegartige Vorsprünge aufweist. Dabei werden beim Einbau zwei Gipskartonplatten derart Seite an Seite angeordnet, dass die stegartigen Vorsprünge nach Innen weisen und die Vorsprünge der beiden Platten aufeinander zu liegen kommen. Durch diese vorbekannte Gestaltung soll aufgrund der Stege eine höhere Stabilität der Gipskartonplatten erreicht werden. Zudem können für einen platzsparenden Transport die Gipskartonplatten auch versetzt angeordnet werden, so dass die Stege nebeneinander zu liegen kommen.

Die US 2 308 942 beschreibt eine Gipskartonplatte bestehend aus zwei miteinander verbundenen Lagen, von denen eine Luftkanäle aufweist. Die Kanäle sind dabei derart angeordnet, dass sie im Inneren der Gipskartonplatte und nicht an einer von deren Außenseiten liegen. Weiterhin weist die vorbekannte Gipskartonplatte an einer Ihrer Außenseiten schwalbenschwanzförmige Nuten auf. Diese dienen einer besseren Befestigung der Platten beim Anbringen mittels Gips an einer Wand.

Aus der WO 00/08271 ist eine Gipskartonplatte bekannt, welche auf ihrer Rückseite Rillen aufweist. An diesen Rillen kann ein Schneidwerkzeug angelegt werden, was es erleichtert, die Gipskartonplatte zuzuschneiden. Zudem sollen die Rillen zu einer verbesserten Haftung von Gipskleber dienen, welcher auf die Rückseite der Gipskartonplatte aufgebracht wird. Zusätzlich können zwei benachbarte Gipskartonplatten mittels einer gleichfalls gerillten Platte verbunden werden, welche in die Rillen zweier benachbarter Gipskartonplatten eingreift. Die vorbekannte Gipskartonplatte hat jedoch den Nachteil, dass eine starke Schallübertragung stattfinden kann.

EP 0 246 464 beschreibt eine Schallschluckbeschichtung einer Akustikwand mit einer Absorberplatte von Helmholtz-Resonatoren, welche von einer Tapetenbahn überdeckt wird.

Aufgabe der vorliegenden Erfindung ist es, eine in Trockenbauweise erstellte Trennwand mit verbesserten Schallübertragungseigenschaften anzugeben.

Diese Aufgabe wird mit den Merkmalen der unabhängigen Ansprüche gelöst. Die Unteransprüche enthalten vorteilhafte Ausgestaltungen.

Das an die Gipskartonplatte anzuschließende bzw, angeschlossene Bauteil, insbesondere eine Profilschiene eines Ständers oder Riegels des Traggerüsts der Trennwand, liegt dabei nicht vollflächig an der Außenseite der Gipskartonplatte an, sondern nur an den Vorsprüngen, so dass die Anlagefläche wesentlich verringert ist. Diese wesentliche Verringerung der Anlagefläche führt zu einer erheblichen Verminderung der Schallübertragung. Damit lassen sich Trennwände mit wesentlich verbesserten Schalldämmeigenschaften errichten, ohne dass hierfür aufwendige und kostspielige Maßnahmen im Bereich der Ständer und Riegel des Traggerüsts erforderlich würden.

Vorzugsweise werden die Vorsprünge durch einzelne, rasterartig angeordnete Erhebungen der Kartonlage gebildet. Durch die Gestaltung und Anordnung dieser Erhebungen lässt sich der für die Schallübertragung wirksame Flächenanteil optimal gestalten. Weitere vorteilhafte Ausgestaltungen des Erfindergedankens sind Gegenstand weiterer Unteransprüche.

Nachfolgend werden Ausführungsbeispiele der Erfindung näher erläutert, die in der Zeichnung dargestellt sind.
Es zeigt:
Fig. 1-4 in räumlicher Darstellungsweise jeweils eine Gipskartonplatte mit Vorsprüngen an ihrer einen Außenfläche,
Fig. 5 einen vergrößerten Teilschnitt längs der Linie V-V in Fig. 4,
Fig. 6 eine weitere abgewandelte Ausführungsform einer Gipskartonplatte in einer räumlichen Teildarstellung,
Fig. 7-9 in Schnittdarstellungen ähnlich der Fig. 4 jeweils abgewandelter Ausführungsformen einer Gipskartonplatte und
Fig. 10 und 11 in räumlichen Darstellungen entsprechend den Fig. 1-4 die Verbindung von jeweils zwei Gipskartonplatten, wobei die Ausführungsform nach Fig. 10 in den Ansprüchen nicht erfasst ist.

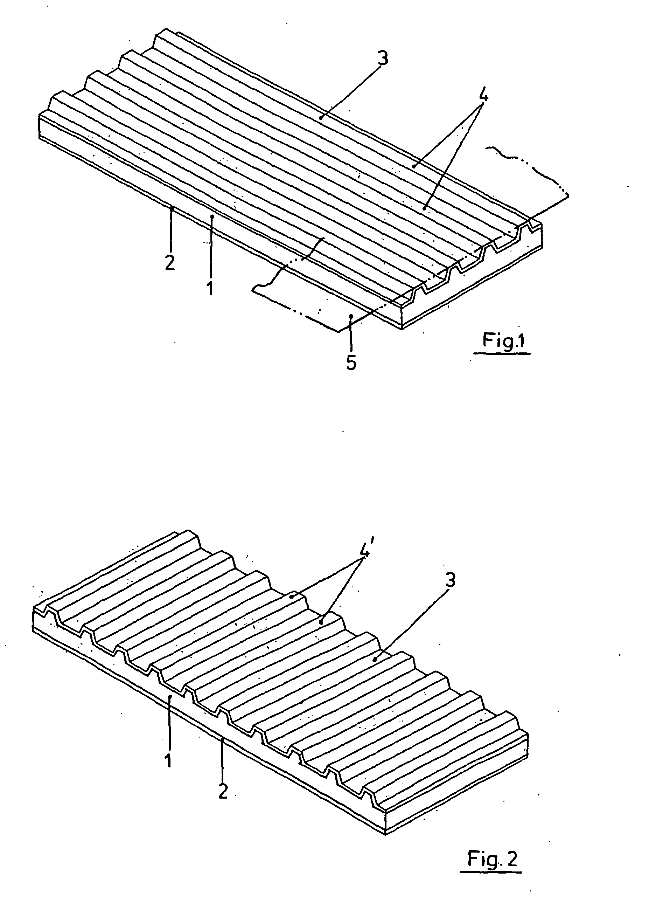

Die in der Fig. 1 dargestellte Gipskartonplatte weist eine aus Gips bestehende Kernschicht 1 auf, die beiderseits jeweils mit einer Kartonlage 2 bzw. 3 versehen ist. Die Kartonlage 2 ist glatt. Die Kartonlage 3 weist streifenförmige Erhebungen 4 auf, die in Längsrichtung der rechteckigen Kartonlage 3 verlaufen. Die streifenförmigen Erhebungen 4 bilden an der einen Außenseite der Gipskartonplatte regelmäßig angeordnete Vorsprünge, deren Außenflächen in einer gemeinsamen, in Fig. 1 mit strichpunktierten Linien angedeuteten Ebene 5 liegen.

Hiervon unterscheidet sich das Ausführungsbeispiel nach Fig. 2 nur dadurch, dass die streifenförmigen Erhebungen 4' der einen Kartonlage 3 in Querrichtung der rechteckigen Kartonlage 3 und damit auch der Gipskartonplatte verlaufen.

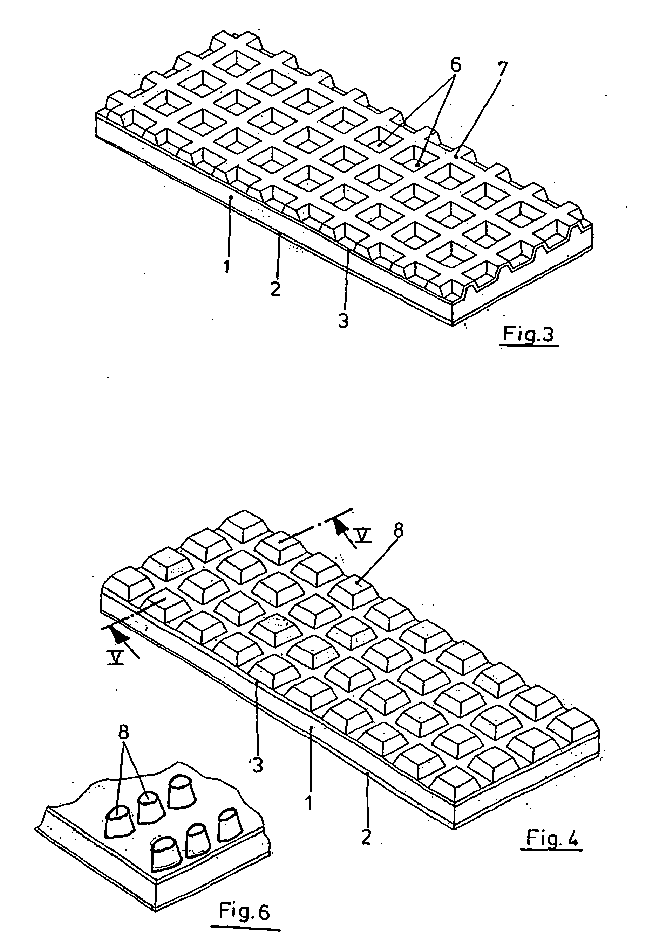

Die in Fig. 3 gezeigte Gipskartonplatte weist in ihrer einen Kartonlage 3 an ihrer Außenseite einzelne, rasterartig angeordnete Vertiefungen 6 auf. Das zwischen den Vertiefungen 6 verbleibende Flächengitter 7 bildet hierbei die Vorsprünge.

Beim Ausführungsbeispiel nach Fig. 4 werden die Vorsprünge durch einzelne, rasterartig angeordnete Erhebungen 8 der einen Kartonlage 3 gebildet. Diese Erhebungen 8 sind beim Ausführungsbeispiel nach Fig. 4 als Pyramidenstümpfe mit vorzugsweise quadratischer Grundfläche ausgeführt.

Fig. 6 zeigt, dass die Erhebungen 8 beispielsweise auch als Kegelstümpfe ausgebildet sein können.

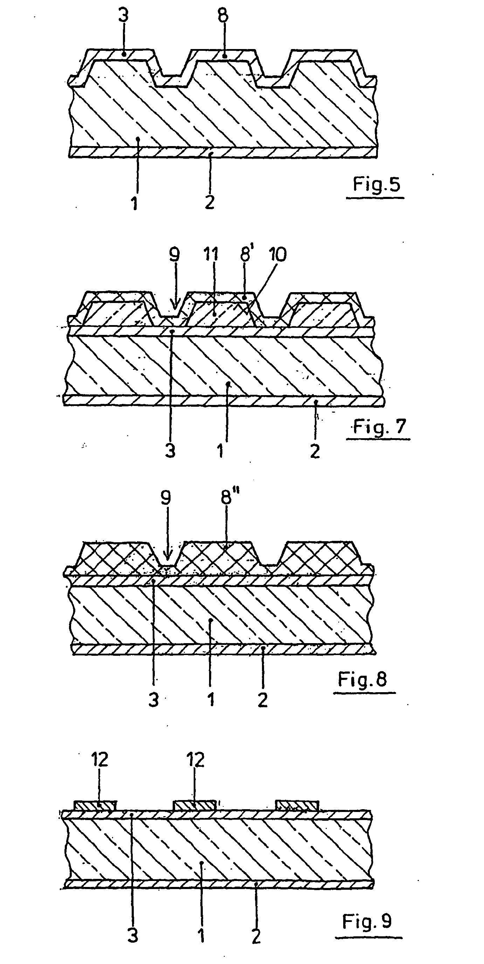

Wie man aus der Schnittdarstellung in Fig. 5 erkennt, sind die Erhebungen 8 unter Beibehaltung einer zumindest angenähert gleichbleibenden Kartondicke durch Verformung der Kartonlage 3 gebildet. Sie stellen einzelne, tief gezogene Näpfe in der Kartonlage 3 dar. In gleicher Weise können auch die Vertiefungen 6 des Ausführungsbeispiels nach Fig. 3 durch napfartig tief gezogene Vertiefungen gebildet werden.

Bei den Ausführungen nach den Fig. 7 und 8 sind die beiden Kartonlagen 2 und 3 beiderseits der Kernschicht 1 wie bei herkömmlichen Gipskartonplatten eben ausgeführt. Die eine Kartonschicht 3 trägt eine aufgeklebte oder aufkaschierte Decklage 9, an der die Vorsprünge 8 und 8' ausgebildet sind. Während bei der Ausführung nach Fig. 8 die Decklage 9 eine die Vorsprünge 8" bildende Oberseite und eine glatte, mit der Kartonlage 3 verbundene Unterseite aufweist, bildet die Decklage 9 bei der Ausführung nach Fig. 7 eine die Vorsprünge 8' bildende Oberseite und eine Unterseite mit den Vorsprüngen 8' jeweils entsprechenden Vertiefungen 10. Diese Vertiefungen 10 können Hohlräume bilden oder - wie in Fig. 7 gezeigt - mit einem vorzugsweise schalldämmenden Material 11 ausgefüllt sein.

Bei der in Fig. 9 gezeigten Ausführung einer Gipskartonplatte mit zwei glatten, ebenen Kartonlagen 2 und 3 werden die Vorsprünge an der einen Außenseite der Gipskartonplatte durch auf die Kartonplatte 3 aufgeklebte Flächenstücke 12 gebildet.

Allen dargestellten Ausführungsformen ist gemeinsam, dass die Außenfläche der Vorsprünge in einer gemeinsamen Ebene 5 liegen, wie dies in Fig. 1 angedeutet ist. In dieser Ebene 5 folgt die Anlage an dem anzuschließenden Bauteil, beispielsweise einer C-Profilschiene eines Ständers oder Riegels eines Traggerüsts einer Trennwand.

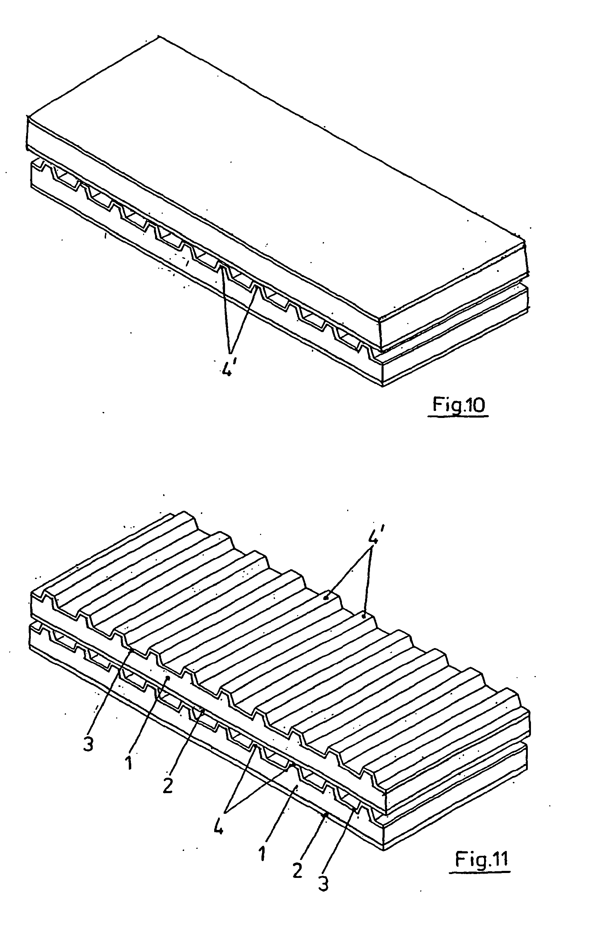

In Fig. 10 ist die Verbindung der in Fig. 2 dargestellten Gipskartonplatte mit querverlaufenden streifenförmigen Erhebungen 4' mit einer herkömmlichen, glatten Gipskartonplatte gezeigt. Eine so aufgebaute doppellagige Wandschale weist einen erhöhten inneren Schallübergangswiderstand auf, weil auch hierbei die Berührungsflächen zwischen den beiden Gipskartonplatten verringert sind.

Abweichend hiervon zeigt Fig. 11 die Verbindung von zwei Gipskartonplatten gemäß Fig. 2, wobei somit auch die obere Gipskartonplatte die beschriebenen streifenförmigen Erhebungen 4' aufweist, mit denen die so gebildete doppellagige Wandschale am Traggerüst befestigt wird. Durch die Verringerung der Übertragungsflächen ist hierbei die Schallübertragung sowohl zwischen den beiden Gipskartonplatten als auch beim Übergang in das Traggerüst verringert.

## Patentansprüche

1. In Trockenbauweise erstellte Trennwand, umfassend ein eine C-Profilschiene aufweisendes Traggerüst, an dem beiderseits Gipskartonplatten mit einer aus Gips bestehenden Kernschicht (1), die beiderseits jeweils mit einer Kartonlage (2,3) versehen ist, befestigt sind, wobei die Gipskartonplatten an mindestens einer Außenseite regelmäßig angeordnete Vorsprünge (4, 4', 7, 8, 8', 8", 12) aufweisen, wobei die Außenflächen jeweils einer der Gipskartonplatten in einer gemeinsamen Ebene (5) liegen, und wobei die C-Profilschiene des Traggerüsts zur Verminderung der Schallübertragung nicht vollflächig, sondern nur an den Vorsprüngen (4, 4', 7, 8, 8', 8", 12) der Gipskartonplatte anliegt, so dass die Anlagefläche wesentlich verringert ist.

2. In Trockenbauweise erstellte Trennwand nach Anspruch 1, **dadurch gekennzeichnet, dass** die Vorsprünge durch einzelne, rasterartig angeordnete Erhebungen (8) der Kartonlage (3) gebildet werden.

3. In Trockenbauweise erstellte Trennwand nach Anspruch 1, **dadurch gekennzeichnet, dass** die Vorsprünge durch streifenförmige Erhebungen (4, 4') der Kartonlage (3) gebildet werden.

4. In Trockenbauweise erstellte Trennwand nach Anspruch 3, **dadurch gekennzeichnet, dass** die streifenförmigen Erhebungen in Längsrichtung der rechteckigen Kartonlage (3) verlaufen.

5. In Trockenbauweise erstellte Trennwand nach Anspruch 3, **dadurch gekennzeichnet, dass** die streifenförmigen Erhebungen (4') in Querrichtung der rechteckigen Kartonlage (3) verlaufen.

6. In Trockenbauweise erstellte Trennwand nach Anspruch 1, **dadurch gekennzeichnet, dass** die Gipskartonplatte an ihrer Außenseite einzelne rasterartig angeordnete Vertiefungen (6) aufweist und dass ein zwischen den Vertiefungen verbleibendes Flächengitter (7) die Vorsprünge bildet.

7. In Trockenbauweise erstellte Trennwand nach Anspruch 2 oder 6, **dadurch gekennzeichnet, dass** die Erhebungen (8) oder Vertiefungen (6) unter Beibehaltung einer zumindest angenähert gleichbleibenden Kartondicke durch Verformung der Kartonlage (3) gebildet sind.

8. In Trockenbauweise erstellte Trennwand nach Anspruch 1, **dadurch gekennzeichnet, dass** die Vorsprünge (8', 8") an einer auf die Kartonlage (3) aufgeklebten oder aufkaschierten Decklage (9) ausgebildet sind.

9. In Trockenbauweise erstellte Trennwand nach Anspruch 8, **dadurch gekennzeichnet, dass** die Decklage (9) eine die Vorsprünge bildende Oberseite und eine glatte, mit der Kartonlage (3) verbundene Unterseite aufweist.

10. In Trockenbauweise erstellte Trennwand nach Anspruch 1, **dadurch gekennzeichnet, dass** die Decklage (9) eine die Vorsprünge (8') bildende Oberseite aufweist und die Unterseite eine den Vorsprüngen (8') entsprechende Vertiefung aufweist.

11. In Trockenbauweise erstellte Trennwand nach Anspruch 10, **dadurch gekennzeichnet, dass** die Vertiefungen (10) Hohlräume bilden.

12. In Trockenbauweise erstellte Trennwand nach Anspruch 10, **dadurch gekennzeichnet, dass** die Vertiefungen (10) mit einem vorzugsweise schalldämmenden Material (11) ausgefüllt sind.

13. In Trockenbauweise erstellte Trennwand nach Anspruch 1, **dadurch gekennzeichnet, dass** die Vorsprünge durch auf die Kartonlage (3) aufgeklebte Flächenstücke (12) gebildet werden.

14. Verwendung von Gipskartonplatten mit einer aus Gips bestehenden Kernschicht (1), die beiderseits jeweils mit einer Kartonlage (2,3) versehen ist, wobei die Gipskartonplatten an mindestens ihren dem Traggerüst zugewandten Außenseiten regelmäßig angeordnete Vorsprünge (4, 4', 7, 8, 8', 8", 12) aufweisen und wobei die Außenflächen der Vorsprünge (4, 4', 7, 8, 8', 8", 12) jeweils einer der Gipskartonplatten in einer gemeinsamen Ebene liegen, zur Erstellung einer in Trockenbauweise erstellten Trennwand, umfassend ein eine C-Profilschiene aufweisendes Traggerüst, an dem beiderseits die Gipskartonplatten befestigt werden, wobei die C-profilschiene des Traggerüsts zur Verminderung der Schallübertragung nicht vollflächig, sondern nur an den Vorsprüngen (4, 4', 7, 8, 8', 8", 12) der Gipskartonplatte anliegt, so dass die Anlagefläche wesentlich verringert ist.

## Claims

1. Dry-construction partition wall, comprising a support framework, which has a C-profile rail and to both sides of which are fastened plasterboards having a core layer (1), which consists of gypsum and is provided on each side with a paperboard layer (2, 3), wherein the plasterboards have regularly arranged projections (4, 4', 7, 8, 8', 8", 12) on at least one outer side, the outer surfaces of in each case one of the plasterboards lying in a common plane (5), and wherein the C-profile rail of the support framework, in order to reduce the transmission of sound, does not bear over the entire surface area but instead only against the projections (4, 4', 7, 8, 8', 8", 12) of the plasterboard, such that the bearing surface is reduced significantly.

2. Dry-construction partition wall according to Claim 1, **characterized in that** the projections are formed by individual raised areas (8) of the paperboard layer (3), which are arranged in a grid pattern.

3. Dry-construction partition wall according to Claim 1, **characterized in that** the projections are formed by strip-shaped raised areas (4, 4') of the paperboard layer (3).

4. Dry-construction partition wall according to Claim 3, **characterized in that** the strip-shaped raised areas run in the longitudinal direction of the rectangular paperboard layer (3).

5. Dry-construction partition wall according to Claim 3, **characterized in that** the strip-shaped raised areas (4') run in the transverse direction of the rectangular paperboard layer (3).

6. Dry-construction partition wall according to Claim 1, **characterized in that** the outer side of the plasterboard is provided with individual depressions (6) arranged in a grid pattern, and **in that** a surface grid (7) which remains between the depressions forms the projections.

7. Dry-construction partition wall according to Claim 2 or 6, **characterized in that** the raised areas (8) or depressions (6) are formed by deformation of the paperboard layer (3), with an at least approximately constant paperboard thickness being retained.

8. Dry-construction partition wall according to Claim 1, **characterized in that** the projections (8', 8") are formed on a cover layer (9), which is adhesively bonded or laminated onto the paperboard layer (3).

9. Dry-construction partition wall according to Claim 8, **characterized in that** the cover layer (9) has a top side forming the projections and a smooth bottom side joined to the paperboard layer (3).

10. Dry-construction partition wall according to Claim 1, **characterized in that** the cover layer (9) has a top side forming the projections (8'), and the bottom side has a depression which corresponds to the projections (8').

11. Dry-construction partition wall according to Claim 10, **characterized in that** the depressions (10) form hollow spaces.

12. Dry-construction partition wall according to Claim 10, **characterized in that** the depressions (10) are filled with a preferably acoustically insulating material (11).

13. Dry-construction partition wall according to Claim 1, **characterized in that** the projections are formed by flat pieces (12) which are adhesively bonded onto the paperboard layer (3).

14. Use of plasterboards having a core layer (1), which consists of gypsum and is provided on each side with a paperboard layer (2, 3), wherein at least those outer sides of the plasterboards which face towards the support framework are provided with regularly arranged projections (4, 4', 7, 8, 8', 8", 12), and wherein the outer surfaces of the projections (4, 4', 7, 8, 8', 8", 12) of in each case one of the plasterboards lie in a common plane, for producing a dry-construction partition wall, comprising a support framework which has a C-profile rail and to both sides of which are fastened the plasterboards, wherein the C-profile rail of the support framework, in order to reduce the transmission of sound, does not bear over the entire surface area but instead only against the projections (4, 4', 7, 8, 8', 8", 12) of the plasterboard, such that the bearing surface is reduced significantly.

## Revendications

1. Cloison en construction à sec, comprenant une structure portante présentant un rail profilé en forme de C, sur laquelle sont fixées des deux côtés des plaques de parement en plâtre avec une couche centrale (1) constituée de plâtre, qui est pourvue des deux côtés à chaque fois d'une couche de carton (2, 3), les plaques de parement en plâtre présentant sur au moins un côté extérieur des saillies réparties uniformément (4, 4', 7, 8, 8', 8", 12), les surfaces extérieures de chacune des plaques de parement en plâtre étant à chaque fois situées dans un plan commun (5), et le rail profilé en forme de C de la structure portante s'appliquant pour réduire la transmission du son non pas sur toute sa surface mais uniquement au niveau des saillies (4, 4', 7, 8, 8', 8", 12) de la plaque de parement en plâtre, de sorte que la surface d'appui soit considérablement réduite.

2. Cloison en construction à sec selon la revendication 1, **caractérisée en ce que** les saillies sont formées par des rehaussements individuels (8) de la couche de carton (3) disposés en forme de trame.

3. Cloison en construction à sec selon la revendication 1, **caractérisée en ce que** les saillies sont formées par des rehaussements (4, 4') de la couche de carton (3) en forme de bande.

4. Cloison en construction à sec selon la revendication 3, **caractérisée en ce que** les rehaussements en forme de bande s'étendent dans la direction longitudinale de la couche de carton (3) rectangulaire.

5. Cloison en construction à sec selon la revendication 3, **caractérisée en ce que** les rehaussements (4') en forme de bande s'étendent dans la direction transversale de la couche de carton (3) rectangulaire.

6. Cloison en construction à sec selon la revendication 1, **caractérisée en ce que** la plaque de parement en plâtre présente sur son côté extérieur des renfoncements individuels (6) disposés en forme de trame et **en ce qu'**une grille de surface (7) subsistant entre les renfoncements forme les saillies.

7. Cloison en construction à sec selon la revendication 2 ou 6, **caractérisée en ce que** les rehaussements (8) ou les renfoncements (6) sont formées par déformation de la couche de carton (3) en conservant une épaisseur de carton au moins approximativement uniforme.

8. Cloison en construction à sec selon la revendication 1, **caractérisée en ce que** les saillies (8', 8") sont collées sur une couche de revêtement (9) collée ou contrecollée sur la couche de carton (3).

9. Cloison en construction à sec selon la revendication 8, **caractérisée en ce que** la couche de revêtement (9) présente un côté supérieur formant les saillies et un côté inférieur lisse connecté à la couche de carton (3).

10. Cloison en construction à sec selon la revendication 1, **caractérisée en ce que** la couche de revêtement (9) présente un côté supérieur formant les saillies (8') et le côté inférieur présente un renfoncement correspondant aux saillies (8').

11. Cloison en construction à sec selon la revendication 10, **caractérisée en ce que** les renfoncements (10) forment des cavités.

12. Cloison en construction à sec selon la revendication 10, **caractérisée en ce que** les renfoncements (10) sont remplis d'un matériau (11) de préférence atténuant les sons.

13. Cloison en construction à sec selon la revendication 1, **caractérisée en ce que** les saillies sont formées par des éléments de surface (12) collés sur la couche de carton (3).

14. Utilisation de plaques de parement en plâtre avec une couche centrale (1) constituée de plâtre, qui est pourvue des deux côtés à chaque fois d'une couche de carton (2, 3), les plaques de parement en plâtre présentant sur au moins leur côté extérieur tourné vers la structure portante des saillies réparties uniformément (4, 4', 7, 8, 8', 8", 12), les surfaces extérieures de chacune des plaques de parement en plâtre étant à chaque fois situées dans un plan commun, pour créer une cloison en construction à sec, comprenant une structure portante présentant un rail profilé en forme de C sur lequel sont fixées des deux côtés les plaques de parement en plâtre, le rail profilé en forme de C de la structure portante s'appliquant pour réduire la transmission du son non pas sur toute sa surface mais uniquement au niveau des saillies (4, 4', 7, 8, 8', 8", 12) de la plaque de parement en plâtre, de sorte que la surface d'appui soit considérablement réduite.
